# EUROPEAN PATENT APPLICATION

(11) **EP 4 344 233 A1**
(43) Date of publication of application: **27.03.2024**
(21) Application number: 22903501.9
(22) Date of filing: 07.12.2022
(51) Int. Cl.: H04N 21/472

(54) **TEMPLATE UPDATING METHOD AND APPARATUS, DEVICE, AND STORAGE MEDIUM**

(30) Priority: 09.12.2021 CN 202111501394
(71) Applicant: Beijing Zitiao Network Technology Co., Ltd., Beijing 100190 (CN)
(72) Inventor: LI, Xinwei, Beijing 100086 (CN); ZHAO, Jianfan, Beijing 100086 (CN)
(74) Representative: Dentons UK and Middle East LLP
(86) International application number: PCT/CN2022/137182
(87) International publication number: WO 2023/104079

(57) **Abstract**

The present disclosure provides a template updating method and apparatus, a device, and a storage medium. The method comprises: first, upon receiving a trigger operation for a target video editing template, displaying the target video editing template on a video template editing page; and then, upon receiving an editing operation for a storyboard lens and/or photographing indication information in a storyboard description set in the target video editing template, updating the target video editing template to obtain an updated video editing template, wherein the updated video editing template can be used for generating a target result video. Therefore, according to the embodiments of the present disclosure, a video editing template can be updated, so that the updated video editing template can satisfy the personalized video creation requirement of the user, and thus, the video creation experience of the user is improved.

## Description

### CROSS-REFERENCE TO RELATED APPLICATIONS

The present application is based on and claims priority to Chinese Application No. 202111501394.5, which was filed on December 09, 2021. The disclosure of the Chinese Application is incorporated into the present application in its entirety.

### TECHNICAL FIELD

The present disclosure relates to the field of data processing, and in particular, to a template updating method and apparatus, device, and storage medium.

### BACKGROUND ART

With the popularity of multimedia short videos, people's interest in video creation has skyrocketed; in order to meet the growing enthusiasm of people in video creation, video editing templates have emerged as the times require, allowing users to easily create video works based on video editing templates.

### CONTENTS OF THE INVENTION

The present disclosure provides a template updating method and apparatus, device and storage medium, capable of updating a video editing template.

According to a first aspect, the present disclosure provides a template updating method, the method comprising:
in response to a trigger operation for a target video editing template, displaying the target video editing template on a video template editing page, wherein the target video editing template comprises a set of storyboard descriptions that comprises shooting indication information of at least one storyboard scene, the shooting indication information being used for indicating at least one of a shooting mode or shooting content characteristics of the storyboard scene, a sequential relation between the at least one storyboard scene being indicated in the set of storyboard descriptions; and
in response to an editing operation for at least one of the storyboard scene or the shooting indication information in the set of storyboard descriptions, updating the target video editing template to obtain an updated video editing template, wherein an updated set of storyboard descriptions in the updated video editing template and the set of storyboard descriptions in the target video editing template comprise at least one of incompletely identical storyboard scenes or incompletely identical shooting indication information, the updated video editing template being used to generate a target result video that comprises at least one initial video material, the at least one initial video material being set respectively for at least one storyboard scene in the updated video editing template.

In an alternative embodiment, the target video editing template further comprises video fragment description information that is used for indicating a shooting content outline of a video fragment corresponding to the at least one storyboard scene, the method further comprising:
in response to an editing operation for the video fragment description information in the target video editing template, updating the target video editing template.

In an alternative embodiment, the target video editing template further comprises a content catalog that corresponds to at least one video fragment, the method further comprising:
in response to an editing operation for the content catalog in the target video editing template, updating the target video editing template.

In an alternative embodiment, the target video editing template is stored in a first table, a unit row in the first table has a corresponding relation with a content catalog and is used to store the content catalog, video fragment description information corresponding to the content catalog and shooting indication information of storyboard scene corresponding to the video fragment description information, and a sub-unit row in the unit row has a corresponding relation with the video fragment description information.

In an alternative embodiment, the updating the target video editing template in response to an editing operation for the video fragment description information in the target video editing template comprises:
in response to a preset select operation for first video fragment description information in the target video editing template, displaying an editing floating window for a sub-unit row corresponding to the first video fragment description information, wherein a delete option is comprised in the editing floating window; and
in response to a trigger operation for the delete option in the editing floating window, deleting the sub-unit row as well as the video fragment description information and shooting indication information of storyboard scene stored in the sub-unit row.

In an alternative embodiment, after the displaying an editing floating window for a sub-unit row corresponding to the first video fragment description information in response to a preset select operation for first video fragment description information in the target video editing template, the method further comprises:
in response to a trigger operation for the add option in the editing floating window, adding at least one sub-unit row to a unit row corresponding to the sub-unit row based on a position where the sub-unit row is located.

In an alternative embodiment, the updating the target video editing template in response to an editing operation for the content catalog in the target video editing template comprises:
in response to a preset select operation for a first content catalog in the target video editing template, displaying an editing floating window for a unit row corresponding to the first content catalog, wherein a delete option is comprised in the editing floating window; and
in response to a trigger operation for the delete option in the editing floating window, deleting the unit row as well as the content catalog, video fragment description information and shooting indication information of storyboard scene stored in the unit row.

In an alternative embodiment, after the displaying an editing floating window for a unit row corresponding to the first content catalog in response to a preset select operation for a first content catalog in the target video editing template, the method further comprises:
in response to a trigger operation for the add option in the editing floating window, adding at least one unit row to the first table based on a position where the unit row is located.

In an alternative embodiment, after the updating the target video editing template in response to an editing operation for at least one of the storyboard scenes or the shooting indication information in the set of storyboard descriptions to obtain an updated video editing template, the method further comprises:
publishing the updated video editing template.

According to a second aspect, the present disclosure provides a template updating apparatus, the apparatus comprising:
a display module for displaying a target video editing template on a video template editing page in response to a trigger operation for the target video editing template, wherein the target video editing template comprises a set of storyboard descriptions that comprises shooting indication information of at least one storyboard scene, the shooting indication information being used for indicating at least one of a shooting mode or shooting content characteristics of the storyboard scene, a sequential relation between the at least one storyboard scene being indicated in the set of storyboard descriptions; and
a first update module for updating the target video editing template in response to an editing operation for at least one of the storyboard scene or the shooting indication information in the set of storyboard descriptions to obtain an updated video editing template, wherein an updated set of storyboard descriptions in the updated video editing template and the set of storyboard descriptions in the target video editing template comprise at least one of incompletely identical storyboard scenes or incompletely identical shooting indication information, the updated video editing template being used to generate a target result video that comprises at least one initial video material, the at least one initial video material being set respectively for at least one storyboard scene in the updated video editing template.

According to a third aspect, the present disclosure provides a computer readable storage medium having stored therein instructions that, when run on a terminal device, cause the terminal device to implement the above method.

According to a fourth aspect, the present disclosure provides a device, comprising: a memory, a processor, and a computer program stored on the memory and executable on the processor that, when executed by the processor, implements the above method.

According to a fifth aspect, the present disclosure provides a computer program product comprising a computer program/instructions that, when executed by a processor, implements the above method.

### DESCRIPTION OF THE DRAWINGS

The drawings here are incorporated into the description and form part of the description, showing embodiments consistent with the present disclosure, and are used together with the description to explain the principles of the present disclosure.

In order to more clearly illustrate the embodiments of the present disclosure or technical solutions in related arts, a brief introduction will be given below for the drawings required to be used in the description of the embodiments or related arts; it is obvious that, for an ordinary technician in the art, he or she may also acquire other drawings according to such drawings, without spending any inventive effort.
Figure 1 is a flow chart illustrating a template updating method provided in an embodiment of the present disclosure.
Figure 2 is a schematic diagram illustrating a video template editing page provided in an embodiment of the present disclosure.
Figure 3 is a schematic diagram of another video template editing page provided in an embodiment of the present disclosure.
Figure 4 is a schematic structural diagram illustrating a template updating apparatus provided in an embodiment of the present disclosure.
Figure 5 is a schematic structural diagram illustrating a template updating device provided in an embodiment of the present disclosure.

### DETAILED DESCRIPTION OF THE EMBODIMENTS

In order that the above objects, features and advantages of the present disclosure may be more clearly understood, the solutions of the present disclosure will be further described below. It is to be noted that, without conflictions, the embodiments and the features in the embodiments of the present disclosure can be combined with each other.

Many details are illustrated hereinbelow to facilitate sufficient understandings on the present disclosure, but the present disclosure may also be implemented by manners different than those as mentioned here; obviously, the embodiments as described in the description are just a part, instead of all, of the embodiments of the present disclosure.

The video creation needs of users are various, and the functionality of video editing templates provided to users is gradually unable to meet the personalized video creation needs of users; therefore, how to meet the personalized video creation needs of users is currently a technical problem that needs to be urgently solved.

In order to meet people's personalized video creation needs, the present disclosure provides a template updating method, comprising: first displaying a target video editing template on a video template editing page when a trigger operation for the target video editing template is received. Then, when an editing operation for a storyboard scene and/or shooting indication information in a set of storyboard descriptions in the target video editing template is received, updating the target video editing template to obtain an updated video editing template, wherein the updated video editing template can be used to generate a target result video. It follows that the embodiment of the present disclosure can update the video editing template, so that the updated video editing template can meet the personalized video creation needs of users, thereby improving their video creation experience.

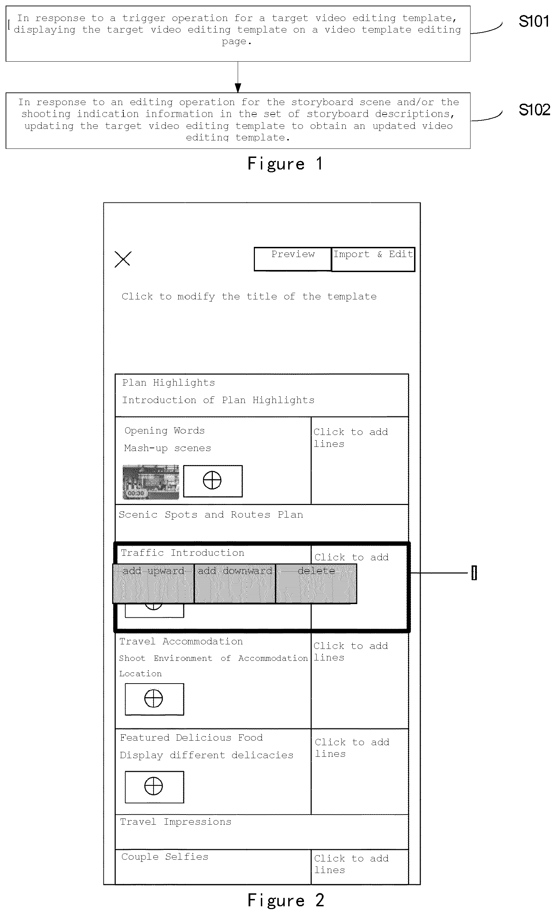

On a basis of this, an embodiment of the present disclosure provides a template updating method, referring to Figure 1, in which a flow chart illustrating a template updating method provided in an embodiment of the present disclosure is shown, the method comprising:
S101: In response to a trigger operation for a target video editing template, displaying the target video editing template on a video template editing page.

Wherein, the target video editing template comprises a set of storyboard descriptions that comprises shooting indication information of at least one storyboard scene, the shooting indication information being used for indicating a shooting mode and/or shooting content characteristics of the storyboard scene, a sequential relation between the at least one storyboard scene being indicated in the set of storyboard descriptions.

In the embodiment of the present disclosure, the target video editing template may be any video editing template. In an alternative embodiment, the user, based on a recommendation stream of video editing templates, may choose any one of the video editing templates as the target video editing template, such as a Cut-Same template.

In the embodiment of the present disclosure, the trigger operation for the target video editing template may comprise a template editing operation or a template use operation or the like triggered for the target video editing template. When the trigger operation for the target video editing template is received, it is possible to jump to the video template editing page and display the target video editing template on the video template editing page.

In practical applications, the target video editing template comprises at least one storyboard scene, each with shooting indication information to indicate a shooting mode, shooting content characteristics, etc. of the storyboard scene, wherein the shooting mode can comprise a camera movement manner of the storyboard scene, etc., and the shooting content characteristics can comprise shooting objects, shooting steps, etc. It is to be noted that, there is a sequential relation between respective storyboard scenes in the target video editing template, and the sequential relation is used to determine a playback order relation between respective video fragments in a target result video generated based on the target video editing template.

In an alternative embodiment, in order to provide template users with richer shooting indication information, the target video editing template in the embodiment of the present disclosure may further comprise video fragment description information for indicating a shooting content outline of a video fragment corresponding to the at least one storyboard scene. That is, one video fragment corresponds to at least one storyboard scene, each with shooting indication information for indicating a shooting mode and/or shooting content characteristics of the storyboard scene, and each video fragment is provided with video fragment description information for indicating a shooting content outline of at least one storyboard scene corresponding to the video fragment. Based on the shooting indication information of the storyboard scene and the video fragment description information in the target video editing template, the user can easily complete video creation.

In another alternative embodiment, in order to further provide template users with richer shooting indication information, the target video editing template in the embodiment of the present disclosure may further comprise content catalogs, each of which has a corresponding relation with at least one video fragment and is used for representing a stage of the video fragment corresponding to the content catalog in the whole video. For example, the content catalog can comprise opening words, development, climax, and ending.

In another alternative embodiment, in order to further provide template users with richer shooting indication information, the target video editing template in the embodiment of the present disclosure may further comprise lines copywriting; each video fragment corresponds to a piece of lines copywriting, the lines copywriting being used for indicating shooting lines of the corresponding video fragment.

S102: In response to an editing operation for the storyboard scene and/or the shooting indication information in the set of storyboard descriptions, updating the target video editing template to obtain an updated video editing template.

Wherein, an updated set of storyboard descriptions in the updated video editing template and the set of storyboard descriptions in the target video editing template comprise incompletely identical storyboard scenes and/or incompletely same shooting indication information, the updated video editing template being used to generate a target result video that comprises at least one initial video material, the at least one initial video material being set respectively for at least one storyboard scene in the updated video editing template.

In an embodiment of the present disclosure, when the target video editing template is displayed on the video template editing page, the user can trigger an editing operation for the storyboard scene and/or the shooting indication information in the target video editing template to update the target video editing template to obtain an updated video editing template corresponding to the target video editing template.

In an alternative embodiment, after the updated video editing template of the target video editing template is obtained, the updated video editing template can be published so that other users can also use the updated video editing template for video creation.

In addition, after the updated video editing template corresponding to the target video editing template is obtained, a target result video can also be generated directly based on the updated video editing template.

In an alternative embodiment, the editing operation for the storyboard scene and/or the shooting indication information in the set of storyboard descriptions may comprise an add operation for a storyboard scene and shooting indication information of the storyboard scene; specifically, when an add operation for a storyboard scene and shooting indication information is received, the storyboard scene that is correspondingly added by the add operation and the shooting indication information of the storyboard scene are updated to the set of storyboard descriptions in the target video editing template, achieving an update of the target video editing template.

In another alternative embodiment, the editing operation for the storyboard scene and/or the shooting indication information in the set of storyboard descriptions may further comprise a delete operation for the storyboard scene; specifically, when a delete operation for at least one storyboard scene in the set of storyboard descriptions is received, the at least one storyboard scene and the shooting indication information corresponding respectively to the at least one storyboard scene are deleted from the set of storyboard descriptions, achieving an update of the target video editing template.

In another alternative embodiment, the editing operation for the storyboard scene and/or the shooting indication information in the set of storyboard descriptions may further comprise a modify operation for the shooting indication information of the storyboard scene; specifically, when a modify operation for shooting indication information of any one storyboard scene is received, the shooting indication information of the storyboard scene is updated based on modification content corresponding to the modify operation, thereby achieving an update of the target video editing template.

In another alternative embodiment, the editing operation for the storyboard scene and/or the shooting indication information in the set of storyboard descriptions may further comprise an adjust operation for a sequential relation between storyboard scenes; specifically, when an adjust operation for a sequential relation between storyboard scenes is received, the sequential relation between the storyboard scenes in the target video editing template as well as a sequential relation between the shooting indication information corresponding to the storyboard scenes in the set of storyboard descriptions is adjusted based on the adjust operation, thereby achieving an update of the target video editing template.

In the embodiment of the present disclosure, the specific implementation of the editing operation for the storyboard scene and/or the shooting indication information in the set of storyboard descriptions is not limited, and the above is only an exemplary description to facilitate understandings.

In the embodiment of the present disclosure, for the video fragment description information in the target video editing template, an editing operation may also be triggered; specifically, when an editing operation for the video fragment description information in the target video editing template is received, an update of the target video editing template is performed.

In an alternative embodiment, the editing operation for the video fragment description information in the target video editing template may comprise an add operation for the video fragment description information; it can be understood that after an add operation triggered for the video fragment description information in the target video editing template is received, for added video fragment description information, the user may also add storyboard scenes corresponding thereto, shooting indication information of the storyboard scenes, lines copywriting, etc.

In another alternative embodiment, the editing operation for the video fragment description information in the target video editing template may further comprise a delete operation for the video fragment description information in the target video editing template; specifically, when a delete operation triggered for the video fragment description information in the target video editing template is received, the video fragment description information corresponding to the delete operation as well as the storyboard scene, shooting indication information of the storyboard scene, and lines copywriting and the like corresponding to the video fragment description information is deleted from the target video editing template.

In another alternative embodiment, the editing operation for the video fragment description information in the target video editing template may further comprise a modify operation for the video fragment description information in the target video editing template, and based on the modification content corresponding to the modify operation, the video fragment description information is updated, thereby achieving an update of the target video editing template.

In another alternative embodiment, the editing operation for the video fragment description information in the target video editing template may further comprise an adjust operation for a sequential relation between the video fragment description information in the target video editing template; specifically, when an adjust operation for a sequential relation between the video fragment description information in the target video editing template is received, the sequential relation between pieces of video fragment description information in the target video editing template can be adjusted based on the adjust operation; based on the sequential relation between pieces of video fragment description information, a sequential relation between the storyboard scenes and shooting indication information corresponding to the pieces of video fragment description information is adjusted, thereby achieving an update of the target video editing template.

In the embodiment of the present disclosure, for the content catalog in the target video editing template, any of the above editing operations may also be triggered; specifically, when an editing operation for the content catalog in the target video editing template is received, an update of the target video editing template is performed. Wherein the editing operation can comprise an add operation, a delete operation, a modify operation, a sequence adjust operation, and the like.

For example, the editing operation for the content catalog in the target video editing template comprises a delete operation for the content catalog in the target video editing template; specifically, when a delete operation for any content catalog in the target video editing template is received, the content catalog as well as the video fragment description information, storyboard scene, shooting indication information of the storyboard scene and the like corresponding to the content catalog is deleted.

In the embodiment of the present disclosure, for understanding of the editing operation for the content catalog in the target video editing template, reference may be made to the above description, and the embodiment of the present disclosure would not repeat it here.

In the template updating method provided in the embodiment of the present disclosure, first when a trigger operation for a target video editing template is received, the target video editing template is displayed on a video template editing page. Then, when an editing operation for a storyboard scene and/or shooting indication information in a set of storyboard descriptions in the target video editing template is received, the target video editing template is updated so that an updated video editing template is obtained, wherein the updated video editing template can be used to generate a target result video. It follows that the embodiment of the present disclosure can update the video editing template, so that the updated video editing template can meet the personalized video creation needs of users, thereby improving their video creation experience.

Based on the content of the above embodiment, the embodiment of the present disclosure provides a specific template updating method, wherein the target video editing template is implemented based on a table; specifically, the shooting indication information of the storyboard scene, video fragment description information, lines copywriting, content catalogs, etc. in the target video editing template are stored in a table.

Referring to Figure 2, a schematic diagram of a video template editing page provided in the embodiment of the present disclosure is shown, wherein a target video editing template is displayed on the video template editing page, and the content in the target video editing template is displayed in a table form.

It is assumed that the table used to display the content in the target video editing template is hereinafter referred to as a first table, and in the first table, a unit row has a corresponding relation with a content catalog; for example, the content catalogs in Figure 2 comprise "Plan Highlights", "Scenic Spots and Routes Plan", and "Travel Impressions", and each content catalog comprises at least one video fragment description information, for example, the video fragment description information corresponding to the content catalog "Plan Highlights" in Figure 2 comprises "Opening Words", and the video fragment description information corresponding to the content catalog "Scenic Spots and Routes Plan" comprises "Traffic Introduction", "Travel Accommodation", and "Featured Delicious Food". Each video fragment description information comprises shooting indication information of at least one storyboard scene, for example, in Figure 2, the shooting indication information for the storyboard scene corresponding to the video fragment description information "Opening Words" comprises "Mash-up scenes", and the shooting indication information of the storyboard scene corresponding to the video fragment description information "Traffic Introduction" comprises "Display Transportation Means". In addition, each video fragment description information has a piece of corresponding lines copywriting, and the specific content of lines copywriting is not shown in Figure 2.

A unit row in the first table in Figure 2 has a corresponding relation with a content catalog, and is used to store the corresponding content catalog, video fragment description information corresponding to the content catalog, shooting indication information of a storyboard scene corresponding to the video fragment description information, lines copywriting corresponding to the video fragment description information, and the like. Each unit row comprises at least one sub-unit row, each of which has a corresponding relation with video fragment description information and is used to store a piece of video fragment description information in the corresponding unit row, shooting indication information of a storyboard scene corresponding to the video fragment description information, lines copywriting corresponding to the video fragment description information, etc.

In the embodiment of the present disclosure, based on basic operations of a table, the content stored in the target video editing template in the first table can be edited.

In an alternative embodiment, a select operation can be triggered for the video fragment description information in the target video editing template. Specifically, in response to a preset select operation for first video fragment description information in the target video editing template, an editing floating window is displayed for a sub-unit row corresponding to the first video fragment description information, wherein a delete option and an add option can be comprised in the editing floating windows, wherein the add option can comprise an add upward option and an add downward option. As shown in Figure 2, ① indicates a preset select operation for first video fragment description information in the target video editing template, and an editing floating window is displayed for a sub-unit row corresponding to the first video fragment description information.

In response to a trigger operation for the delete option in the editing floating window, a corresponding sub-unit row as well as video fragment description information and shooting indication information of storyboard scene stored in the sub-unit row is deleted. As shown in Figure 2, when the trigger operation for the delete option in the editing floating window is received, the sub-unit row in which the video fragment description information "Traffic Introduction" is located and all the content in the sub-unit row are deleted.

In response to a trigger operation for the add option in the editing floating window, at least one sub-unit row is added to a unit row corresponding to the sub-unit row based on a position where the sub-unit row is located. As shown in Figure 2, if the "Add upward" option in the editing floating window displayed for the sub-unit row where the video fragment description information "Traffic Introduction" is located is received, a sub-unit row is added at a position above the video fragment description information "Traffic Introduction" in the catalog content "Scenic Spots and Routes Plan", and in the sub-unit row, the user may add new video fragment description information, etc. for the catalog content "Scenic Spots and Routes Plan".

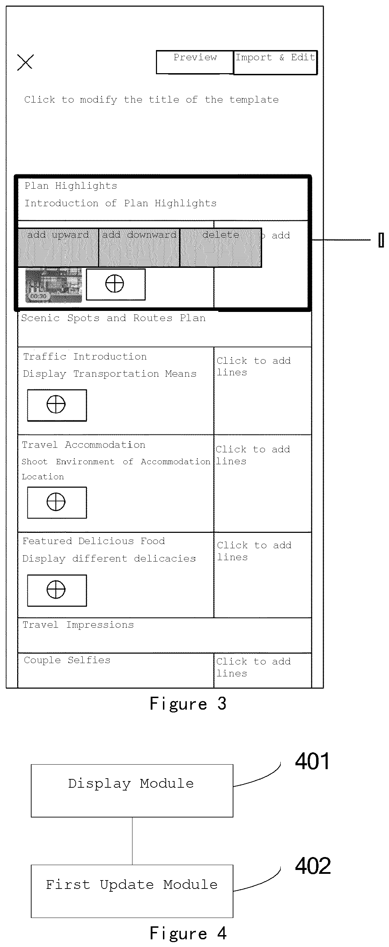

In another alternative embodiment, a select operation can be triggered for the content catalog in the target video editing template. Specifically, in response to a preset select operation for a first content catalog in the target video editing template, an editing floating window is displayed for a unit row corresponding to the first content catalog, wherein a delete option and an add option can be comprised in the editing floating window, and the add option can comprise an add upward option and an add downward option. As shown in Figure 3, ② indicates a preset select operation for a first content catalog in the target video editing template, and an editing floating window is displayed for a unit row corresponding to the first content catalog.

In response to a trigger operation for the delete option in the editing floating window, a corresponding unit row as well as a content catalog, video fragment description information and shooting indication information of storyboard scene stored in the unit row is deleted. As shown in Figure 3, when a trigger operation for the delete option in the editing floating window is received, a unit row in which the content catalog "Plan Highlights" is located and all the content in the unit row are deleted.

In response to a trigger operation for the add option in the editing floating window, at least one unit row is added to the first table based on a position where a corresponding unit row is located. As shown in Figure 3, if the "Add downward" option in the editing floating window displayed for the unit row where the content catalog "Plan Highlights" is located is received, a unit row is added at a position above the content catalog "Plan Highlights", and in the unit row, the user may add a new content catalog, and add video fragment description information, etc. into the new content catalog.

In addition, in the embodiment of the present disclosure, it is also possible to trigger an editing operation for a storyboard scene in the first table, such as "Display Transportation Means" in Figure 3 and its corresponding material upload window, For example, deleting any storyboard scene or adding a storyboard scene or the like, which will not be further described here.

The embodiment of the present disclosure can update the target video editing template based on basic operations of the table, so that the updated video editing template can meet the personalized video creation needs of users, thereby improving their video creation experience.

Based on the same inventive concept as the above method embodiments, the present disclosure further provides a template updating apparatus, referring to Figure 4, in which a schematic structural diagram illustrating a template updating apparatus provided in an embodiment of the present disclosure is shown, the video comprising:
a display module 401 for displaying a target video editing template on a video template editing page in response to a trigger operation for the target video editing template, wherein the target video editing template comprises a set of storyboard descriptions that comprises shooting indication information of at least one storyboard scene, the shooting indication information being used for indicating a shooting mode and/or shooting content characteristics of the storyboard scene, a sequential relation between the at least one storyboard scene being indicated in the set of storyboard descriptions; and
a first update module 402 for updating the target video editing template in response to an editing operation for the storyboard scene and/or the shooting indication information in the set of storyboard descriptions to obtain an updated video editing template, wherein an updated set of storyboard descriptions in the updated video editing template and the set of storyboard descriptions in the target video editing template comprise incompletely identical storyboard scenes and/or incompletely identical shooting indication information, the updated video editing template being used to generate a target result video that comprises at least one initial video material, the at least one initial video material being set respectively for at least one storyboard scene in the updated video editing template.

In an alternative embodiment, the target video editing template further comprises video fragment description information that is used for indicating a shooting content outline of a video fragment corresponding to the at least one storyboard scene, the apparatus further comprising:
a second update module for updating the target video editing template in response to an editing operation for the video fragment description information in the target video editing template.

In an alternative embodiment, the target video editing template further comprises a content catalog that corresponds to at least one video fragment, the apparatus further comprising:
a third update module for updating the target video editing template in response to an editing operation for the content catalog in the target video editing template.

In an alternative embodiment, the target video editing template is stored in a first table, a unit row in the first table has a corresponding relation with a content catalog and is used to store the content catalog, video fragment description information corresponding to the content catalog and shooting indication information of storyboard scene corresponding to the video fragment description information, and a sub-unit row in the unit row has a corresponding relation with the video fragment description information.

In an alternative embodiment, the second update module comprises:
a first display sub-module for displaying an editing floating window for a sub-unit row corresponding to first video fragment description information in response to a preset select operation for the first video fragment description information in the target video editing template, wherein a delete option is comprised in the editing floating window; and
a first delete sub-module for deleting the sub-unit row as well as the video fragment description information and shooting indication information of storyboard scene stored in the sub-unit row in response to a trigger operation for the delete option in the editing floating window.

In an alternative embodiment, the apparatus further comprises:
a first add sub-module for adding at least one sub-unit row to a unit row corresponding to the sub-unit row based on a position where the sub-unit row is located in response to a trigger operation for the add option in the editing floating window.

In an alternative embodiment, the third update module comprises:
a second display sub-module for displaying an editing floating window for a unit row corresponding to a first content catalog in response to a preset select operation for the first content catalog in the target video editing template, wherein a delete option is comprised in the editing floating window; and
a second delete sub-module for deleting the unit row as well as the content catalog, video fragment description information and shooting indication information of storyboard scene stored in the unit row in response to a trigger operation for the delete option in the editing floating window.

In an alternative embodiment, the apparatus further comprises:
a second add sub-module, for adding at least one unit row to the first table based on a position where the unit row is located in response to a trigger operation for the add option in the editing floating window.

In an alternative embodiment, the apparatus further comprises:
a publish module for publishing the updated video editing template.

In the template updating apparatus provided in the embodiment of the present disclosure, first, when a trigger operation for a target video editing template is received, the target video editing template is displayed on a video template editing page. Then, when an editing operation for a storyboard scene and/or shooting indication information in a set of storyboard descriptions in the target video editing template is received, the target video editing template is updated so that an updated video editing template is obtained, wherein the updated video editing template can be used to generate a target result video. It follows that the embodiment of the present disclosure can update the video editing template, so that the updated video editing template can meet the personalized video creation needs of users, thereby improving their video creation experience.

In addition to the above method and apparatus, the embodiment of the present disclosure further provides a computer readable storage medium having stored therein instructions that, when run on a terminal device, cause the terminal device to implement the template updating method described in the embodiment of the present disclosure.

The embodiment of the present disclosure further provides a computer program product comprising a computer program/instructions that, when executed by a processor, implements the template updating method described in the embodiment of the present disclosure.

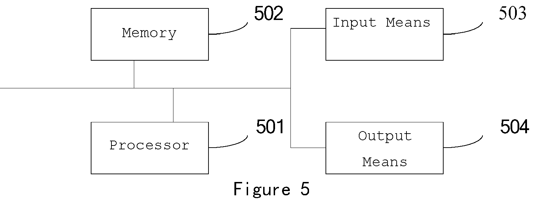

In addition, an embodiment of the present disclosure further provides a template updating device 500, which, referring to Figure 5, can comprise:
a processor 501, a memory 502, an input means 503, and an output means 504. The template updating device may comprise one or more processors 501, and Figure 5 shows an example in which one processor is employed. In some embodiments of the present disclosure, the processor 501, the memory 502, the input means 503 and the output means 504 may be connected via a bus or other means, wherein connection via a bus is taken as an example in Figure 5.

The memory 502 may be used to store software programs and modules, and the processor 501 executes various functional applications and data processing of the template updating device by operating the software programs and modules stored in the memory 502. The memory 502 may mainly comprise a program storage area and a data storage area, wherein the program storage area may store an operating system, an application program required for at least one function, and the like. Further, the memory 502 may comprise high-speed random access memory, and may also comprise nonvolatile memory, such as at least one magnetic disk storage device, flash memory device, or other volatile solid state storage device. The input means 503 may be used to receive input numeric or character information and to generate signal inputs relating to user settings and function control of the template updating device.

Specifically, in the present embodiment, the processor 501 loads executable files corresponding to processes of one or more application programs into the memory 502 according to the following instructions, and the application programs stored in the memory 502 are run by the processor 501 to thereby implement various functions of the above template updating device.

It is to be noted that terms used herein to describe relations such as "first" and "second" are only used to distinguish one entity or operation from another, an do not necessarily require or suggest that these entities or operations have such an actual relation or sequence. Furthermore, the terms "comprising", "including" or any other variables intend to cover nonexclusive containing relations to ensure that a process, method, article or apparatus comprising a series of factors comprises not only those factors but also other factors not explicitly listed, or further comprises factors innate to the process, method, article or apparatus. Without more limitations, a factor defined with the sentence "comprising one ..." does not exclude the case that the process, method, article or apparatus comprising said factor still comprises other identical factors.

The above are only specific embodiments of the present disclosure, which are used to enable those skilled in the art to understand or implement the present disclosure. Various modifications to these embodiments will be readily apparent to those skilled in the art, and the general principles defined herein may be implemented in other embodiments without departing from the spirit and scope of the present disclosure. Thus, the present invention is not intended to be limited to the embodiments described herein, but is to be accorded the widest scope consistent with the principles and novel features disclosed herein.

## Claims

1. A template updating method, comprising:
displaying a target video editing template on a video template editing page in response to a trigger operation for a target video editing template, wherein the target video editing template comprises a set of storyboard descriptions comprising shooting indication information of at least one storyboard scene, the shooting indication information is used for indicating at least one of a shooting mode or shooting content characteristics of the storyboard scene, and a sequential relation between the at least one storyboard scene is indicated in the set of storyboard descriptions; and
updating, in response to an editing operation for at least one of the storyboard scene or the shooting indication information in the set of storyboard descriptions, the target video editing template to obtain an updated video editing template, wherein an updated set of storyboard descriptions in the updated video editing template and the set of storyboard descriptions in the target video editing template comprise at least one of incompletely identical storyboard scenes or incompletely identical shooting indication information, and the updated video editing template is configured to generate a target result video that comprises at least one initial video material, the at least one initial video material being set respectively for at least one storyboard scene in the updated video editing template.

2. The method according to claim 1, wherein the target video editing template further comprises video fragment description information that is used for indicating a shooting content outline of a video fragment corresponding to the at least one storyboard scene, the method further comprising:
updating the target video editing template in response to an editing operation for the video fragment description information in the target video editing template.

3. The method according to claim 2, wherein the target video editing template further comprises a content catalog that corresponds to at least one video fragment, the method further comprising:
updating the target video editing template in response to an editing operation for the content catalog in the target video editing template.

4. The method according to claim 3, wherein the target video editing template is stored in a first table, a unit row in the first table has a corresponding relation with a content catalog and is configured to store the content catalog, video fragment description information corresponding to the content catalog and shooting indication information of the storyboard scene corresponding to the video fragment description information, and a sub-unit row in the unit row has a corresponding relation with the video fragment description information.

5. The method according to claim 4, wherein the updating the target video editing template in response to an editing operation for the video fragment description information in the target video editing template comprises:
displaying, in response to a preset select operation for a first video fragment description information in the target video editing template, an editing floating window for a sub-unit row corresponding to the first video fragment description information, wherein a delete option is comprised in the editing floating window; and
deleting the sub-unit row as well as the video fragment description information and shooting indication information of the storyboard scene stored in the sub-unit row in response to a trigger operation for the delete option in the editing floating window.

6. The method according to claim 5, wherein after the displaying, in response to a preset select operation for a first video fragment description information in the target video editing template, an editing floating window for a sub-unit row corresponding to the first video fragment description information, the method further comprises:
adding at least one sub-unit row to a unit row corresponding to the sub-unit row based on a position where the sub-unit row is located in response to a trigger operation for the add option in the editing floating window.

7. The method according to any of claims 4-6, wherein the updating the target video editing template in response to an editing operation for the content catalog in the target video editing template comprises:
displaying, in response to a preset select operation for a first content catalog in the target video editing template, an editing floating window for a unit row corresponding to the first content catalog, wherein a delete option is comprised in the editing floating window; and
deleting the unit row as well as the content catalog, video fragment description information and shooting indication information of storyboard scene stored in the unit row in response to a trigger operation for the delete option in the editing floating window.

8. The method according to claim 7, wherein after the displaying, in response to a preset select operation for a first content catalog in the target video editing template, an editing floating window for a unit row corresponding to the first content catalog, the method further comprises:
adding at least one unit row to the first table based on a position where the unit row is located in response to a trigger operation for the add option in the editing floating window.

9. The method according to any of claims 1-8, wherein after the updating, in response to an editing operation for at least one of the storyboard scene or the shooting indication information in the set of storyboard descriptions, the target video editing template to obtain an updated video editing template, the method further comprises:
publishing the updated video editing template.

10. A template updating apparatus, comprising:
a display module, configured to display a target video editing template on a video template editing page in response to a trigger operation for the target video editing template, wherein the target video editing template comprises a set of storyboard descriptions that comprises shooting indication information of at least one storyboard scene, the shooting indication information being used for indicating at least one of a shooting mode or shooting content characteristics of the storyboard scene, and a sequential relation between the at least one scene being indicated in the set of storyboard descriptions; and
a first update module, configured to update, in response to an editing operation for at least one of the storyboard scene or the shooting indication information in the set of storyboard descriptions, the target video editing template to obtain an updated video editing template, wherein an updated set of storyboard descriptions in the updated video editing template and the set of storyboard descriptions in the target video editing template comprise at least one of incompletely identical storyboard scenes or incompletely identical shooting indication information, and the updated video editing template is configured to generate a target result video that comprises at least one initial video material, the at least one initial video material being set respectively for at least one storyboard scene in the updated video editing template.

11. A computer readable storage medium having stored therein instructions that, when run on a terminal device, cause the terminal device to implement the method according to any of claims 1-9.

12. A device, comprising: a memory, a processor, and a computer program stored on the memory and executable on the processor that, when executed by the processor, implements the method according to any of claims 1-9 .

13. A computer program product, comprising a computer program/instructions that, when executed by a processor, implements the method according to any of claims 1-9.
